# EUROPEAN PATENT SPECIFICATION

(11) **EP 2 883 651 B1**
(45) Date of publication and mention of the grant of the patent: **13.09.2017**
(21) Application number: 14192971.1
(22) Date of filing: 13.11.2014
(51) Int. Cl.: B23K 37/06, B23K 15/00, B23P 15/04, F01D 5/28, F01D 5/00, F01D 5/14

(54) **Method of fabricating a steam turbine blade equipped with erosion shield with electron beam welding using a shim**
Herstellungsverfahren einer Dampfturbinenschaufel mit Erosionsschild durch Elektronstrahlschweissen unter Verwendung eines Zusatzmaterials
Procédé de fabrication d'une aube de turbine à vapeur équipée d'un écran de protection contre l'érosion par soudage par faisceau d'électron utilisant un matériau d'apport

(30) Priority: 13.11.2013 JP 2013234681
(43) Date of publication of application: 17.06.2015
(73) Proprietor: Mitsubishi Hitachi Power Systems, Ltd., Yokohama 220-8401 (JP)
(72) Inventor: Ishihara, Mikihisa, Yokohama, Kanagawa 220-8401 (JP); Endo, Hiroyuki, Yokohama, Kanagawa 220-8401 (JP); Tanaka, Katsumi, Yokohama, Kanagawa 220-8401 (JP); Kashiguchi, Koji, Yokohama, Kanagawa 220-8401 (JP); Maruyama, Toshiyuki, Yokohama, Kanagawa 220-8401 (JP)
(74) Representative: MERH-IP Matias Erny Reichl Hoffmann Patentanwälte PartG mbB

(56) References cited:
- JP-A- H0 523 920
- JP-A- S5 431 050
- JP-A- H07 243 302
- JP-A- H09 225 652
- US-B1- 6 568 077

## Description

### [Technical Field]

The invention relates to a method of fabricating a steam turbine blade equipped with an erosion shield, and in particular, to a method of fabricating a steam turbine blade by joining an erosion shield to a steam turbine blade by means of welding according to the preamble of claim 1 (see, for example, JP S54 31050 A).

### [Background Art]

With a steam-power steam turbine or a nuclear power generation steam turbine, an erosion protection material is jointed to the leading edge of a steam turbine blade, on a side thereof, adjacent to steam-inflow with a shim material interposed therebetween through GTAW (Gas Tungsten Arc Welding) or electron beam welding in order to prevent erosion from occurring at the leading edge of the steam turbine blade for use in wet steam, as described in Patent Literatures 1 through 3.

In general, in the case of joining executed by single-layer welding, using an electron beam, a welding condition, such as an acceleration voltage, an electron beam current, a welding speed, a focal length, etc., is finely adjusted against the type and the board thickness of a constituent material to thereby select an optimum condition for preventing occurrence of burn through before the joining is executed.

### [Citation List]

[Patent Literature 1] Japanese Unexamined Patent Application Publication No. S62(1987)-250124
[Patent Literature 2] Japanese Unexamined Patent Application Publication No. S63(1988)-97802
[Patent Literature 3] Japanese Unexamined Patent Application Publication No. Hei05(1993)-23920

### [Summary of the Invention]

### [Technical Problem]

As higher efficiency of the steam turbine has been attained in recent years, there have been advances in trends toward a longer length of the blade of a turbine blade, and rendering of the turbine blade in a three-dimensional shape, for the purpose of attaining flow optimization, resulting in an increase of the board thickness of the erosion protection material. In the case where the single-layer welding by use of downward electron beam welding is applied to a blade material, an erosion protection material, and a shimmaterial, each of which is larger in thickness, metal melted by heat of the electron beam is caused to flow downward due to empty weight, concurrently with the electron beam penetrating through the board, thereby causing occurrence of burn through of molten metal. A resultant occurrence of an undercut of a bead surface will pose an important issue in the joining of the erosion protection material from a fabrication point of view.

Further, with welding using an electron beam, the larger the thickness of a weldment as a target is, the greater will be the need for increasing a welding current value, that is, an output. Still further, with a low-voltage electron beam welding machine, there is the need for rendering a working current value larger than that for a high-voltage electron beam welding machine. As the output is increased, so does a deviation of an electron beam output, and the range of an optimum welding condition for the single-layer welding will become narrower. The deviation in a welding current will become the cause of a defect due to the burn through of the molten metal and incomplete fusion, thereby causing the joining of the erosion protection material through the single-layer welding using the electron beam welding to be extremely difficult.

There is conceivably a method whereby a stiffening plate is placed on the back side of a groove, in a joint geometry, to thereby prevent occurrence of the burn through in order to cope with the burn through occurring at the time of application of the electron beam welding. With this method, however, there arises the need for preparing a backing material aside from those materials for use in fabrication, resulting in occurrence of a supply cost of the backing material, so that the method has demerits in terms of a fabrication cost.

JP S54 31050 A describes a method enabling to weld a corrosion prevention shield without using jig, by depositing the corrosion prevention shield held between the fore edge of blade through the intermediate shim, on the above fore edge of blade by electron beam welding.

JP H09 225652 A describes a method in which, after square groove edge preparation for dissimilar metals is worked, an insert metal of intermediate metal is inserted as a buffer.

JP H05 23920 A describes that junction surfaces at a right angle to the blade surface are formed at the top end part of a turbine rotor blade main body at two places on different steps, and, at the same time, junction surfaces on different steps facing the junction surfaces of the turbine rotor blade main body are formed on the corrosion protective piece so that the corrosion protective piece can be jointed to the top end part of the turbine rotor blade main body. And, shims having a thickness capable of joining both members at one pass by electron beam welding and a hardness lower than that of both members are interposed between the junction surfaces of the turbine rotor blade main body and the junction surfaces of the corrosion protective piece.

It is therefore an object of the present invention to provide a fabrication method of a steam turbine blade equipped with an erosion shield, whereby an erosion shield can be welded to the leading edge of a steam turbine blade by electron beam welding without separately preparing a backing material, while preventing occurrence of burn through.

### [Solution to Problem]

The above-objected is achieved by the invention according to claim 1. Further preferred developments are described by the dependent claims.

### [Advantageous Effects of Invention]

With the present invention, an erosion shield can be welded to the leading edge of a steam turbine blade without separately preparing a backing material, while preventing occurrence of burn through.

Other problems, configurations, and effects of the invention will be apparent from the following detailed description of the preferred embodiments of the invention.

### [Brief Description of the Drawings]

Figs. 1 (a) through 1 (d) each are a view illustrating the flow of a joining process for an erosion protection material, according to an embodiment of the present invention (a first embodiment);
Figs. 2 (a) through 2 (d) each are a view illustrating the flow of a joining process for an erosion protection material, according to another embodiment of the present invention (a second embodiment);
Figs. 3 (a) through 3 (d) each are a view illustrating the flow of a joining process for an erosion protection material, according to still another embodiment of the present invention (a third embodiment); and
Fig. 4 is a general view of a steam turbine blade as an example of the steam turbine blade to which each embodiment of the present invention is applied.

### [Description of Embodiments]

Embodiments of the present invention are described below with reference to the accompanied drawings.

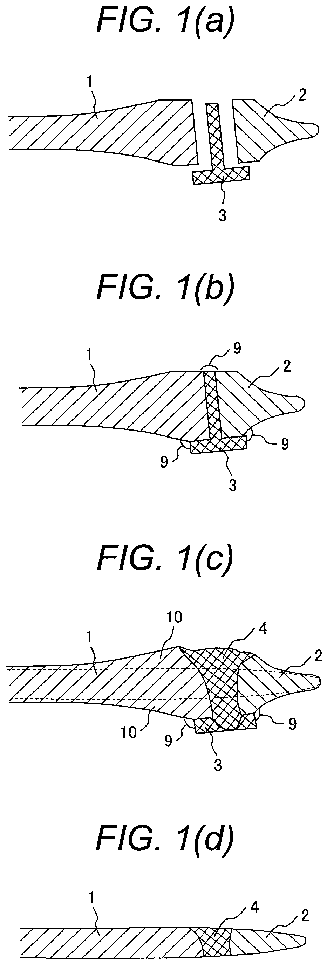

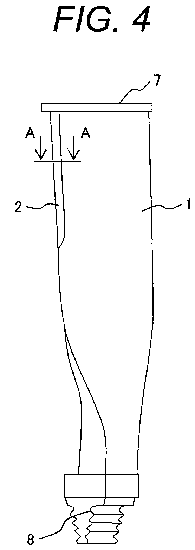

Fig. 4 is a general view of a steam turbine blade, as an example of a steam turbine blade to which each of the embodiments of the present invention is applied. Fig. 4 illustrates the turbine blade in the final stage of the steam turbine in the case of a low pressure turbine. The steam turbine blade has a blade part 1, a shroud cove 7, a coupling part 8 to be coupled with a turbine rotor, and an erosion shield 2 provided at a leading edge part of the blade part (on the steam inflow side of the steam turbine blade), on the tip side thereof. In each of Figs. 1 (a) through 3 (d) to be referred to later on, there is shown the blade part of the steam turbine blade, in cross section, taken on line A - A of Fig. 4.

### First Embodiment

Figs. 1 (a) through 1 (d) each illustrate a fabrication process of a steam turbine blade, according to a first embodiment of the present invention. A leading edge part of the tip of the steam turbine blade is shown in the respective figures. Constituent materials (constituent elements) that constitute the steam turbine blade are composed of the blade part 1 of the steam turbine blade, the erosion shield 2, and a shim 3 disposed between the blade part 1 and the erosion shield 2, as shown in Fig. 1 (a). For the turbine blade, use is made of a Ti alloy (for example, a Ti alloy containing 16% Al, and 4% V), 12-Cr stainless steel, etc. For the erosion shield, use is made of an erosion-resistant Ti alloy (for example, a Ti alloy containing 15% Mo, 5% Zr, and 13% Al) if the turbine blade is made of the Ti alloy, while use is made of a Co alloy if the turbine blade is made of 12-Cr stainless steel. For the shim, use is made of a Ti-made shim or an Ni alloy-made shim, both lower in hardness than the turbine blade and the erosion shield.

The blade part 1, the erosion shield 2, and the shim 3 are assembled, as shown in Fig. 1 (b). With the present embodiment, a mechanism for prevention of burn through occurring at the time of the electron beam welding is provided in the shim 3. More specifically, a part of the shim 3 is used to serve as the mechanism for prevention of the burn through, provided on the back side of a groove, that is, on the outlet side of the electron beam. With the present embodiment, the shim 3 is in a sectional shape resembling the letter T as inverted. And tack welding 9 using GTAW is applied to respective back surfaces of the blade part 1, the erosion shield 2, and the shim 3, opposite from an incidence side of the electron beam, (on the upper side in the figure), and the blade part 1, the erosion shield 2, and the shim 3 are attached to each other in such a way as to minimize a gap therebetween so as to have no opening in the gap.

Thereafter, the single-layer welding by use of the electron beam welding is applied (Fig. 1(c)). With the electron beam welding according to the present embodiment, the single-layer welding is applied to the blade part 1, the erosion shield 2, and the shim 3 by use of low-voltage electron beam welding (for example, up to 60KW) using the low-voltage electron beam welding machine. At this point in time, occurrence of burn through at a weld metal part 4 is prevented by means of the mechanism for prevention of the burn through, composed of the part of the shim 3. By so doing, it is possible to expand tolerance of an electron beam condition in the case of the low-voltage electron beam welding.

Subsequently, portions of the respective constituent materials, including the mechanism for prevention of the burn through, are removed by a machining work so as to be finished up in the shape of the blade part as a target (Fig. 1 (d)). In this machining work, removal of the mechanism for prevention of the burn through, provided in the shim 3, including removal of portions denoted by reference sign 10 shown in Fig. 1 (c) is executed. The removal of the portions denoted by the reference sign 10 is executed so that the blade part of the turbine blade can have the three-dimensional shape for the purpose of flow optimization. A finish processing is executed as appropriate after the machining work.

In the machining work shown in Fig. 1 (d), a weld tip at the time of the electron beam welding, are also removed. The weld tip is susceptible to formation of a blowhole, however, since the portions denoted by reference sign 10, including the weldtip, are removed, the soundness of a welded joint is secured.

With the present embodiment, as a backing function is imparted to a constituent material (the shim in the case of the present embodiment) by making use of the constituent material, joining of the erosion shield to the leading edge of the steam turbine blade (joining of an erosion protection plate to the board of the blade material as a target by means of one-time welding) is enabled by the single-layer welding of the low-voltage electron beam welding without separately preparing the backing material, while preventing occurrence of the burn through. Accordingly, a cost for preparing a separate backing material is saved, and a fabrication cost can be reduced. In the case of an increase in board thickness with respect to the blade part, the erosion shield, and the shim, respectively, in particular, (at the time of an increase in the board thickness, burn through is liable to occur), the joining of the erosion shield can be easily executed. Accordingly, it is possible to fabricate a steam turbine blade designed to suit for a longer turbine blade, and a more complex three-dimensional shape by use of the electron beam welding.

Further, with the present embodiment, the steam turbine blade excellent in strength can be obtained owing to lack of an unwelded part. Still further, since the groove shape of the blade part 1 as well as the erosion shield 2 will be linear, it is also possible to obtain advantageous effects in that the groove shape can be easily formed.

### Second Embodiment

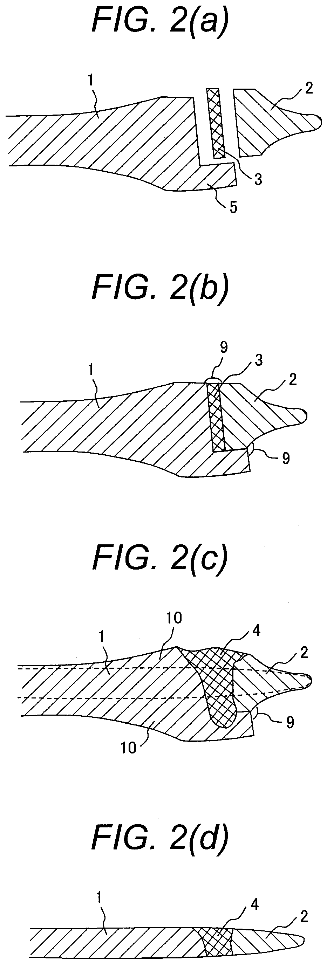

A second embodiment of the present invention is described below with reference to Figs. 2 (a) through 2 (d). Description of parts in the second embodiment, identical to those in the first embodiment, is omitted.

With the present embodiment, a part of the constituent material of a blade part 1, is used as the mechanism for prevention of burn through, provided on the back face of a groove, that is, on the outlet side of an electron beam. With the present embodiment, a joining area between the part of the constituent material of the blade part 1, and an erosion shield 2 is formed in a shape resembling the letter L. A shim 3 and the erosion shield 2 are fitted to a protrusion (pedestal) of the blade part 1, in a shape resembling the letter L. The protrusion in the shape resembling the letter L acts as the mechanism for prevention of the burn through. Otherwise, the present embodiment is similar to the first embodiment, and after the electron beam welding, a machining work including removal of the protrusion of the blade part 1, in the shape resembling the letter L, is executed so as to be finished up in the shape of a turbine blade as a target.

With the present embodiment as well, advantageous effects basically identical to those of the first embodiment are obtained.

### Third Embodiment

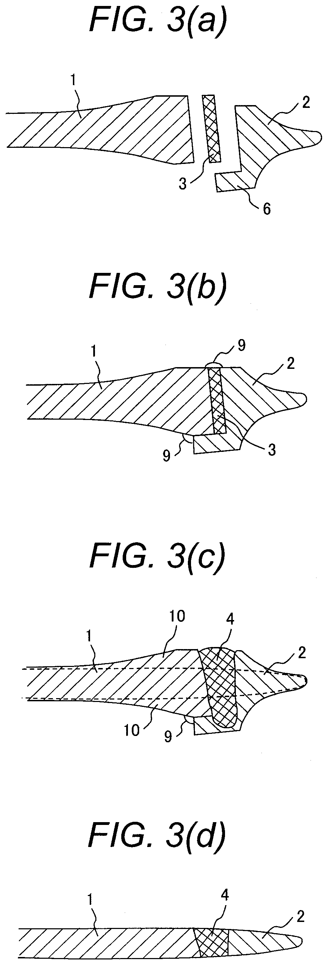

A third embodiment of the present invention is described below with reference to Figs. 3 (a) through 3 (d). Description of parts in the third embodiment, identical to those in the first embodiment, is omitted.

With the present embodiment, part of the constituent material of an erosion shield 2 is used as the mechanism for prevention of burn through, provided on the back of a groove, that is, on the outlet side of an electron beam. With the present embodiment, a joining area between the part of the constituent material of the erosion shield 2 and a blade part 1 is formed in a shape resembling the letter L when viewed from the back side of the drawing in Figs. 3(a) and 3(b). A shim 3 and the erosion shield 2 having a protrusion (pedestal) in the shape resembling the letter L are fitted to the blade part 1. The protrusion in the shape resembling the letter L acts as the mechanism for prevention of the burn through. Otherwise, the present embodiment is similar to the first embodiment, and after the electron beam welding, a machining work including removal of the protrusion of the erosion shield 2, in the shape resembling the letter L, is executed so as to be finished up in the shape of a turbine blade as a target.

With the present embodiment as well, advantageous effects basically identical to those of the first embodiment are obtained.

## Claims

1. A method of fabricating a steam turbine blade equipped with an erosion shield, comprising the steps of:
preparing constituent elements for a steam turbine blade equipped with an erosion shield (2), **characterised by** :
the steam turbine blade having a blade part (1), the erosion shield (2) to be joined to a leading edge part of the blade part (1) on the tip side thereof, and a shim (3) to be disposed between the blade part (1) and the erosion shield (2) at the time of the electron beam welding, wherein the blade part (1), the erosion shield (2) and the shim (3) have a thickness larger than the thickness of the final shape of the blade part (1) and wherein any of the constituent elements has a backing part to serve as a backing for preventing burn through of molten metal at the time of the electron beam welding; and further **characterised by** the following steps :
assembling the constituent elements so that the backing part is arranged on the back side of a groove;
performing single-layer welding by use of downward electron beam welding to the leading edge part of the blade part, the erosion shield and the shim while utilizing the backing; and
applying a machining work including removal of parts of the blade part (1), parts of the erosion shield (2) and the backing part after the electron beam welding so as to be finished up in the final shape of the blade part (1) as a target.

2. The method of fabricating the steam turbine blade according to claim 1, wherein the shim (3) provided with the backing part is prepared in the step of preparing.

3. The method of fabricating the steam turbine blade according to claim 2, wherein the shim (3) formed in a sectional shape resembling the letter T as inverted is prepared in the step of preparing.

4. The method of fabricating the steam turbine blade according to claim 1, wherein the steam turbine blade having the blade part (1) provided with the backing part is prepared in the step of preparing.

5. The method of fabricating the steam turbine blade according to claim 4, wherein the steam turbine blade having the blade part (1) formed in a sectional shape resembling the letter L at a joining area between the blade part (1) and the erosion shield (2) is prepared in the step of preparing.

6. The method of fabricating the steam turbine blade according to claim 1, wherein the erosion shield (2) provided with the backing part is prepared in the step of preparing.

7. The method of fabricating the steam turbine blade according to claim 6, wherein the erosion shield (2) formed in a sectional shape resembling the letter L at a joining area between the erosion shield (2) and the blade part (1) is prepared in the step of preparing.

## Patentansprüche

1. Verfahren zum Herstellen einer Dampfturbinenschaufel, die mit einem Erosionsschutz ausgestattet ist, das die folgenden Schritte umfasst:
Vorbereiten der bildenden Elemente für eine Dampfturbinenschaufel, die mit einem Erosionsschutz (2) ausgestattet ist, **dadurch gekennzeichnet, dass**:
die Dampfturbinenschaufel einen Schaufelteil (1), den Erosionsschutz (2), der an einen vorderen Kantenteil des Schaufelteils (1) auf dessen Spitzenseite angebracht werden soll, und eine Abstandsscheibe (3) aufweist, die zu der Zeit des Elektronenstrahlschweißens zwischen dem Schaufelteil (1) und dem Erosionschutz (2) angeordnet werden soll, wobei der Schaufelteil (1), der Erosionsschutz (2) und die Abstandsscheibe (3) eine Dicke aufweisen, die größer als die Dicke der endgültigen Form des Schaufelteils (1) ist, und wobei eines der bildenden Elemente einen Trägerteil aufweist, um während des Elektronenstrahlschweißens als ein Träger zum Verhindern des Durchbrennens von geschmolzenem Metall zu dienen; und ferner **gekennzeichnet durch** die folgenden Schritte:
Montieren der bildenden Elemente, so dass der Trägerteil auf der Rückseite einer Nut abgeordnet ist;
Durchführen von Einzelschichtschweißen durch Anwendung von nach unten gerichtetem Elektronenstrahlschweißen auf den vorderen Kantenteil des Schaufelteils, den Erosionsschutz und die Abstandsscheibe unter Ausnutzung des Trägers; und
Anwenden einer Bearbeitung von Werkstücken, die das Entfernen von Teilen des Schaufelteils (1), Teilen des Erosionsschutzes (2) und des Trägerteils nach dem Elektronenstrahlschweißen umfasst, so dass sie als ein Zielobjekt in der endgültigen Form des Schaufelteils (1) abgeschlossen werden.

2. Verfahren zum Herstellen der Dampfturbinenschaufel nach Anspruch 1, wobei die Abstandsscheibe (3), die mit dem Trägerteil versehen ist, in dem Vorbereitungsschritt vorbereitet wird.

3. Verfahren zum Herstellen der Dampfturbinenschaufel nach Anspruch 2, wobei die Abstandsscheibe (3), die in einer Querschnittsform gebildet wird, die dem umgedrehten Buchstaben T gleicht, in dem Vorbereitungsschritt vorbereitet wird.

4. Verfahren zum Herstellen der Dampfturbinenschaufel nach Anspruch 1, wobei die Dampfturbinenschaufel, die den Schaufelteil (1) aufweist, der mit dem Trägerteil versehen ist, in dem Vorbereitungsschritt vorbereitet wird.

5. Verfahren zum Herstellen der Dampfturbinenschaufel nach Anspruch 4, wobei die Dampfturbinenschaufel, die den Schaufelteil (1) aufweist, der in einer Querschnittsform, die dem Buchstaben L gleicht, in einem Verbindungsbereich zwischen dem Schaufelteil (1) und dem Erosionsschutz (2) gebildet wird, in dem Vorbereitungsschritt vorbereitet wird.

6. Verfahren zum Herstellen der Dampfturbinenschaufel nach Anspruch 1, wobei der Erosionsschutz (2), der mit dem Trägerteil versehen ist, in dem Vorbereitungsschritt vorbereitet wird.

7. Verfahren zum Herstellen der Dampfturbinenschaufel nach Anspruch 6, wobei der Erosionsschutz (2), der in einer Querschnittsform, die dem Buchstaben L gleicht, in einem Verbindungsbereich zwischen dem Erosionsschutz (2) und dem Schaufelteil (1) gebildet wird, in dem Vorbereitungsschritt vorbereitet wird.

## Revendications

1. Procédé de fabrication d'une aube de turbine à vapeur équipée d'un écran anti-érosion, comprenant les étapes consistant à :
préparer des éléments constitutifs pour une aube de turbine à vapeur équipée d'un écran anti-érosion (2),
**caractérisé en ce que** :
l'aube de turbine à vapeur comprend une partie d'aube (1), l'écran anti-érosion (2) est destiné à être réuni à une portion de bord d'attaque de la partie d'aube (1) sur le côté de la pointe de celle-ci, et une cale (3) à disposer entre la partie d'aube (1) et l'écran anti-érosion (2) au moment du soudage par faisceau d'électrons, dans lequel la partie d'aube (1), l'écran anti-érosion (2) et la cale (3) ont une épaisseur plus grande que l'épaisseur de la forme finale de la partie d'aube (1) et dans lequel l'un quelconque des éléments constitutifs comprend une partie de doublage pour servir de doublage afin d'empêcher un brûlage du métal en fusion au moment du soudage par faisceau d'électrons, et **caractérisé en outre par** les étapes suivantes consistant à :
assembler les éléments constitutifs de telle façon que la partie de doublage est agencée sur le côté arrière d'une rainure ;
exécuter un soudage monocouche en utilisant un soudage par faisceau d'électrons en descendant vers la portion de bord d'attaque de la partie d'aube, l'écran anti-érosion et la cale tout en utilisant le doublage ; et
appliquer un travail d'usinage incluant la suppression de partie de la partie d'aube (1), de partie de l'écran anti-érosion (2) et de la partie de doublage après le soudage par faisceau d'électrons, de manière à obtenir en finition la forme finale de la partie d'aube (1) à titre de cible.

2. Procédé de fabrication de l'aube de turbine à vapeur selon la revendication 1, dans lequel la cale (3) dotée de la partie de doublage est préparée dans l'étape de préparation.

3. Procédé de fabrication de l'aube de turbine à vapeur selon la revendication 2, dans lequel la cale (3), formée avec une forme de section transversale ressemblant à la lettre T inversée, est préparée dans l'étape de préparation.

4. Procédé de fabrication de l'aube de turbine à vapeur selon la revendication 1, dans lequel l'aube de turbine à vapeur ayant la partie d'aube (1) pourvue de la partie de doublage est préparée dans l'étape de préparation

5. Procédé de fabrication de l'aube de turbine à vapeur selon la revendication 4, dans lequel l'aube de turbine à vapeur ayant la partie d'aube (1) formée avec une forme de section transversale ressemblant à la lettre L au niveau d'une zone de jonction entre la partie d'aube (1) et l'écran anti-érosion (2) est préparée dans l'étape de préparation.

6. Procédé de fabrication de l'aube de turbine à vapeur selon la revendication 1, dans lequel l'écran anti-érosion (2) pourvu de la partie de doublage est préparé dans l'étape de préparation.

7. Procédé de fabrication de l'aube de turbine à vapeur selon la revendication 6, dans lequel l'écran anti-érosion (2) formé dans une forme de section transversale ressemblant à la lettre L au niveau d'une zone de jonction entre l'écran anti-érosion (2) et la partie d'aube (1) est préparée dans l'étape de préparation.
